Europäisches Patentamt

European Patent Office

Office européen des brevets

(11) Veröffentlichungsnummer: **0 260 450 B1**

# (12) EUROPÄISCHE PATENTSCHRIFT

(45) Veröffentlichungstag der Patentschrift: **04.12.91**

(51) Int. Cl.⁵: **G02F 1/137**

(21) Anmeldenummer: **87111870.9**

(22) Anmeldetag: **17.08.87**

(54) **Flüssigkristallanzeige.**

(30) Priorität: **12.09.86 CH 3671/86**

(43) Veröffentlichungstag der Anmeldung:
**23.03.88 Patentblatt 88/12**

(45) Bekanntmachung des Hinweises auf die
Patenterteilung:
**04.12.91 Patentblatt 91/49**

(84) Benannte Vertragsstaaten:
**AT BE CH DE ES FR GB IT LI NL SE**

(56) Entgegenhaltungen:
**EP-A- 0 018 180**
**DE-A- 3 327 272**
**DE-A- 3 503 259**
**GB-A- 2 145 837**

(73) Patentinhaber: **F. HOFFMANN-LA ROCHE AG**
**Postfach 3255**
**CH-4002 Basel(CH)**

(72) Erfinder: **Leenhouts, Frans, Dr.**
**Violaweg 73**
**CH-4303 Kaiseraugst(CH)**
Erfinder: **Schadt, Martin, Dr.**
**Liestalerstrasse 77**
**CH-4411 Seltisberg(CH)**

(74) Vertreter: **Finkener und Ernesti Patentanwälte**
**Heinrich-König-Strasse 119**
**W-4630 Bochum 1(DE)**

## Beschreibung

Die Erfindung betrifft eine Flüssigkristallanzeigezelle bestehend aus einer hochverdrillten nematischen Flüssigkeitsschicht, die zwischen zwei mit Elektroden und Oberflächenorientierungen versehenen Platten und Polarisatoren angeordnet ist, und die eine Positive dielektrische Anisotropie aufweist.

Die Erfindung betrifft insbesondere eine Flüssigkristallanzeigezelle der obenerwähnten Art, bei der die nematische Flüssigkeitsschicht einen geringen optischen Gangunterschied aufweist.

Seit einiger Zeit ist bekannt, dass Flüssigkristallanzeigezellen mit hochverdrillten nematischen Flüssigkristallen trotz ihrer intensiven Interferenzfarben im ausgeschalteten Zustand gegenüber denjenigen mit 90°-Verdrillung Vorteile aufweisen. Unter hochverdrillten nematischen Strukturen versteht man dabei solche, die um mehr als 90° verdrillt sind. Es versteht sich, dass zur Erzielung einer derartigen Verdrillung eine Dotierung mit chiralen Zusätzen in der Regel erforderlich ist.

Die Vorteile der Flüssigkristallzellen mit hochverdrillten nematischen Strukturen liegen vor allem in einer besonders steilen elektro-optischen Charakteristik und einem grossen Sichtwinkelbereich. Die steile elektro-optische Charakteristik führt zu hohen Multiplexverhältnissen, die zur Verwirklichung von Anzeigen mit hoher Informationsdichte notwending sind.

Abgesehen von bereits früher gemachten Vorschlägen von hochverdrillten Flüssigkristallzellen, die auf dem sogenannten Guest-Host-Effekt beruhen, war eine der ersten hochverdrillten nematischen Flüssigkristallzellen ohne Farbstoffzusatz diejenige, die in der Europäischen Patentanmeldung Nr. 131 216 von Amstutz, H. et al. beschrieben ist. Bei dieser Zelle weist der Flüssigkristall eine Verdrillung um 180° bis 360° auf. Die Polarisatoren sind gegenüber den Orientierungsrichtungen an den Platten um einen Winkel zwischen 20° und 70° verdreht. Das Verhältnis zwischen Schichtdicke und Ganghöhe des Flüssigkristalls d/p liegt zwischen 0,5 und 0,95. Die Zelle benötigt an den Elektrodenoberflächen eine spezielle Wandorientierung, die grosse Kippwinkel des nematischen Direktors bewirkt. Derartige Wandorientierungen sind in der Herstellung aufwendig und damit teuer.

Die Patentanmeldung GB-A-2 145 837 beschreibt eine Flüssigkristallanzeigezelle, die einen hochverdrillten, chiral dotierten, nematischen Flüssigkristall mit natürlicher Ganghöhe P und mit positiver dielektrischer Anisotropie verwendet.

Danach wurde in zunehmendem Masse und an verschiedenen Stellen an der Entwicklung von Flüssigkristallzellen mit hochverdrillten nematischen Strukturen gearbeitet. Dies daher, weil Flüssigkristallanzeigen immer mehr auch in grossflächigen, hochinformativen Anwendungen eingesetzt werden und dafür eine hohe Multiplexierbarkeit Voraussetzung ist. So wurden bereits viele Winkelbereiche zwischen 90° und 360° für die Verdrillung und für die Anordnung der Polarisatoren zu den Oberflächenorientierungen und zueinander, sowie für die Verhältnisse der optischen Anisotropie $\Delta n$, des Elektrodenabstands bzw. der Dicke d und der natürlichen Ganghöhe P des chiral dotierten nematischen Flüssigkristalls zueinander vorgeschlagen. Für jede der bekannt gewordenen hochverdrillten Strukturen wurden verschiedene Vorteile geltend gemacht, in der Hauptsache die erwähnte bessere Multiplexierbarkeit und der bessere Sichtwinkelbereich. Als nachteilig erweisen sich die intensiven Interferenzfarben solcher Anzeigezellen, die - um Farbvariationen zu vermeiden - äusserst präzise Plattenabstände und damit teure Herstellungsprozesse voraussetzen. Ferner verhindert die starke inhärente Farbigkeit solcher Anzeigen deren Verwendung als farbneutrale elektrooptische Schalter, wie sie u.a. in Farbfernsehanwendungen oder bei farbigen Bildschirmen benötigt werden.

Die der Erfindung zugrunde liegende Aufgabe ergibt sich aus dem vorhandenen Bedürfnis nach noch besseren Flüssigkristallanzeigezellen mit insbesondere geringerer inhärenter Farbigkeit, der Möglichkeit zur Erzeugung von Grautönen, einfacher Herstellung, kurzen Schaltzeiten bei gleichzeitig hohem optischen Kontrast, geringer Sichtwinkelabhängigkeit, guter Multiplexierbarkeit und geringer Abhängigkeit des Anzeigebildes gegenüber Schwankungen des Plattenabstandes der Zelle.

Es wurde nun gefunden, dass mit einer speziellen Kombination von Zellen- und Materialparametern überraschenderweise wesentlich bessere Ergebnisse erzielt werden, als dies von hochverdrillten nematischen Flüssigkristallanzeigen bisher bekannt ist.

Die Flüssigkristallanzeigezelle nach der Erfindung zeichnet sich aus durch die Kombination gemäss dem kennzeichnenden Teil von Anspruch 1.

Der soeben definierte Winkelbereich schliesst sowohl positive als auch negative Kontrast-Darstellungen der Zelle ein.

Bei positiver Kontrast-Darstellung erscheinen elektrisch angesteuerte Segmente dunkel auf hellem Hintergrund; bei negativer Kontrast-Darstellung ist die Situation umgekehrt.

Im folgenden werden anhand der beiliegenden Zeichnungen Ausführungsbeispiele der Erfindung beschrieben. Es zeigen

Figur 1      eine schematische, auseinandergezogene Darstellung einer Flüssigkristallanzeigezelle nach der Erfindung

Figur 2      ein Diagramm der Winkelanordnung, der Oberflächenorientierungen und der Polarisatoren zueinander

Figur 3      eine Spannungs-Kontrastkurve für eine bevorzugte Ausführungsform.

Die vorliegende Flüssigkristallanzeigezelle ist weitgehend ähnlich aufgebaut wie bekannte Zellen, z.B. Twisted Nematic LCDs (Schadt und Helfrich, Appl. Phys. Lett. 18, 127 [1971]), sodass auf den Aufbau hier nicht im einzelnen eingegangen werden muss. Sie besteht aus einer Flüssigkristallschicht 1, die zwischen zwei im wesentlichen zueinander planparallelen Platten 2,3 aus durchsichtigem Material, z.B. Glas, Acrylglas, Kunststofffolien etc., angeordnet ist. Vor der vorderen Platte 3 befindet sich ein Polarisator 5, der vorzugsweise mit der Platte verbunden, beispielsweise aufgeklebt ist. Entsprechend ist der hinteren Platte 3 ein Polarisator 4 zugeordnet. Die Platten haben einen Abstand d voneinander.

Auf ihren dem Flüssigkristall zugewandten Oberflächen weisen die Platten 2,3 die üblichen, zur Darstellung von Zeichen oder Bildpunkten segmentierten Elektrodenbeschichtungen 6 auf. Ausserdem sind die Oberflächen so behandelt, dass sie auf die angrenzenden Flüssigkristallmoleküle eine Richtwirkung ausüben und damit die Richtung des nematischen Direktors $\hat{n}$ bestimmen. Diese Behandlung besteht beispielsweise im Reiben der Oberfläche in einer Richtung oder im Schrägaufdampfen orientierender Schichten, etc., wobei es zwar nicht erforderlich aber auch nicht nachteilig ist, einen Kippwinkel vorzusehen. Das Ergebnis dieser Behandlung wird für den Zweck dieser Beschreibung als Oberflächenorientierung bezeichnet. Die Oberflächenorientierung auf der vorderen Platte 2 ist durch den Pfeil 7 dargestellt. Auf der hinteren Platte 3 ist die Oberflächenorientierung zu derjenigen auf der vorderen Platte parallel und durch den Pfeil 8 gekennzeichnet. Wie aus der folgenden Beschreibung ersichtlich wird, ist es nicht dringend notwendig, die Oberflächenorientierung der beiden Platten parallel zueinander zu machen. Abweichungen in beiden Richtungen sind möglich, ohne dass die Funktion der Zelle wesentlich verschlechtert wird.

Der zur vorderen Platte gehörige Polarisator 4 ist so angeordnet, dass seine Polarisationsrichtung im wesentlichen parallel oder senkrecht zur Oberflächenorientierung an der Platte 2 ist. Auf der hinteren Seite ist der Polarisator 5 so angeordnet, dass seine Polarisationsrichtung senkrecht bzw. parallel zur Oberflächenorientierung 8 auf der Platte 3 ist, wenn die Zelle in positiver Kontrast-Darstellung betrieben wird.

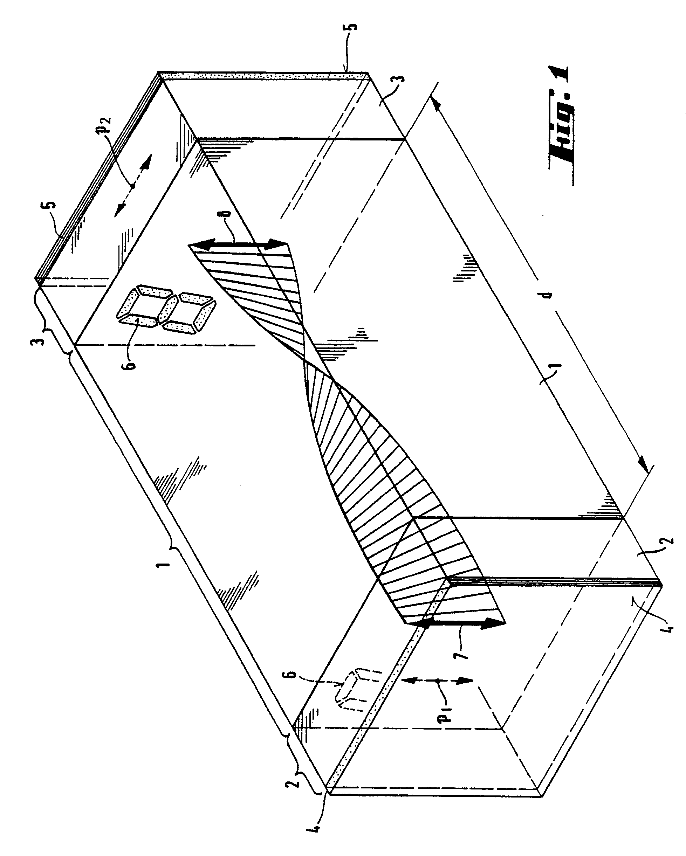

Der Flüssigkristall 1 ist ein nematischer Flüssigkristall, der mit chiralen Zusätzen dotiert ist. Dadurch wird dem nematischen Flüssigkristall eine spontane Verdrillung mit einer bestimmten Ganghöhe P vermittelt. Durch das Zusammenwirken der spontanen Verdrillung infolge der chiralen Zusätze und der Oberflächenorientierung nimmt der Flüssigkristall eine Verdrillung von 180° an. Dies bewirkt die in Fig. 1 dargestellte Verdrehung der nematischen Direktoren $\hat{n}_1$ an der vorderen Platte und $\hat{n}_2$ an der hinteren Platte um 180° gegeneinander.

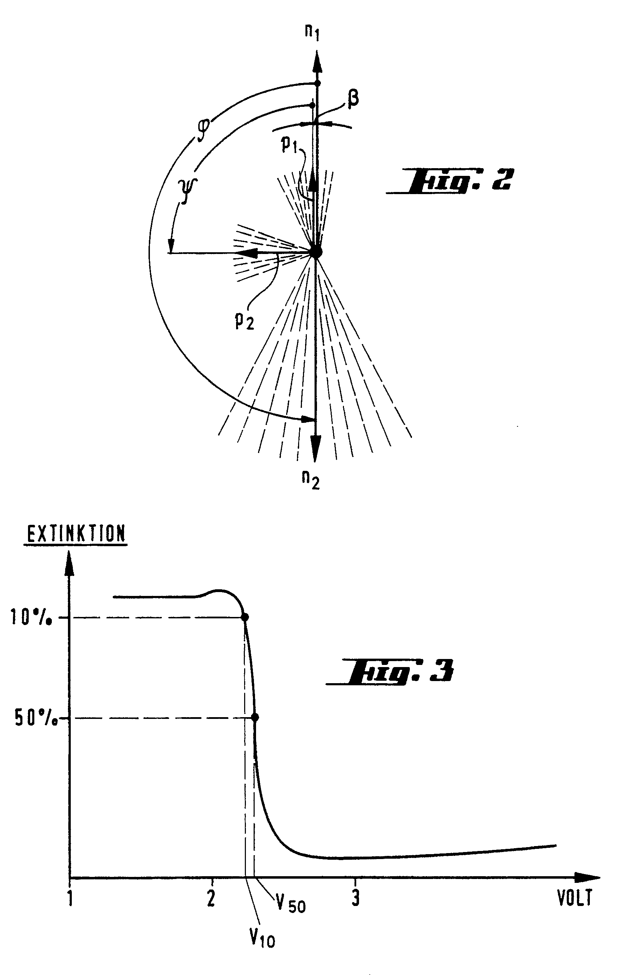

In Figur 2 sind die Winkelverhältnisse der nematischen Direktoren und der Polarisationsrichtungen zueinander dargestellt. $\hat{n}_1$ ist, wie erwähnt, der nematische Direktor an der vorderen Platte 2, $\hat{n}_2$ der nematische Direktor an der rückseitigen Platte 3. Der Verdrillungswinkel zwischen den beiden nematischen Direktoren wird mit $\phi$ bezeichnet. Dieser Winkel ist im bevorzugten Ausführungsbeispiel 180°. Er kann aber nach oben und nach unten von 180° abweichen. Gute Ergebnisse werden mit Absolutwerten von $\phi$ erzielt, die bei rechtssinniger oder linkssinniger Verdrillung zwischen 120° und 260° liegen.

Die Polarisationsrichtung des vorderseitigen Polarisators 4 ist mit $P_1$ bezeichnet. Sie ist beim vorliegenden Ausführungsbeispiel parallel zum nematischen Direktor $\hat{n}_1$ Die Polarisationsrichtung $P_1$ des vorderen Polarisators 4 kann aber um einen Winkel $\beta$ vom nematischen Direktor $n_1$ abweichen und zwar mit guten Ergebnissen im Bereich 0° < $\beta$ < 360°. Die Polarisationsrichtung $P_1$ des vorderen Polarisators 4 kann aber auch senkrecht zum nematischen Direktor $n_1$ liegen und jene von $P_2$ parallel zu $\hat{n}_1$. Auch dabei ist eine Abweichung mit guten Ergebnissen im Bereich 0° < $\beta$ < 360° zulässig. Die Polarisationsrichtung $P_2$ des hinteren Polarisators 5 ist gegenüber jener des vorderen Polarisators $P_1$ um einen Winkel $\psi$ verdreht, der im bevorzugten Ausführungsbeispiel einer positiven Kontrast-Darstellung 90° beträgt (gekreuzte Polarisatoren). Dieser Winkel kann aber zwischen 0° und 180° liegen. Eine Umkehr des Kontrasts erfolgt bei sonst gleichen Winkeln $\phi$ und $\beta$ mit $\psi$ = 0° (parallele Polarisatoren). Bei einer weiteren bevorzugten Ausführung für eine negativ Kontrast-Darstellung ist $\phi$ = 180°, $\beta$ = 0° und $\psi$ = 135°. Die Variationsbreiten sind im Diagramm der Figur 2 durch entsprechende Schattierungen angedeutet.

In einer besonders bevorzugten Ausführungsformen ist z.B. $\phi$ = -175°, $\beta$ = 350°, $\psi$ = 70° (positiver Kontrast), bzw. $\phi$ = -175°, $\beta$ = 5° und $\psi$ = 135° (negativer Kontrast); wobei folgende Flüssigkristallmischung (Mischung "A") in d = 5 μm dicker Schicht verwendet wurde:

| Komponente | | Konzentration (Gew.%) |
|---|---|---|
| Od(4)CP | = p-[trans-4-(4-Pentenyl)cyclohexyl]benzonitril | 8,780 |
| 3CPO2 | = 1-Aethoxy-4-(trans-4-propylcyclohexyl)benzol | 7,320 |
| 3CPS | = p-(trans-4-Propylcyclohexyl)phenylisothiocyanat | 11,700 |
| 4P(1)P | = p-(5-Butyl-2-pyrimidinyl)benzonitril | 4,870 |
| 3CAP2 | = 4-Aethyl-1-[2-(trans-4-propylcyclohexyl)äthyl]benzol | 4,390 |
| 4CEPO2 | = trans-4-Butylcyclohexancarbonsäure-p-äthoxyphenylester | 10,730 |
| 5CEPO1 | = trans-4-Pentylcyclohexancarbonsäure-p-methoxyhexylester | 10,730 |
| 4CEC4 | = trans-4-Butylcyclohexancarbonsäure-trans-4-butylcyclohexylester | 9.280 |
| 4PP(1)P | = p-[5-(4-Butylphenyl)-2-pyrimidinyl]benzonitril | 4,400 |
| φd(4)CPP | = 4'-[trans-4-(4-Pentenyl)cyclohexyl]biphenylcarbonitril | 6,850 |
| Od(4)CPP3 | = 4'-[trans-4-(4-Pentenyl)cyclohexyl]-4-propylbiphenyl | 5,850 |
| 5CPAC4 | = 1-[2-(trans-4-Butylcyclohexyl)äthyl]-4-(trans-4-pentylcyclohexyl)benzol | 9,750 |
| 5CPPAC4 | = 4-[2-(trans-4-Butylcyclohexyl)äthyl]-4'-(trans-4-pentylcyclohexyl)biphenyl | 5,350 |

Diese Mischung wurde noch mit einem geeigneten chiralen Zusatz versehen.

Ein zweites Ausführungsbeispiel der Erfindung wurde mit der folgenden Mischung "B" hergestellt:

| Komponente | | Kozentration (Gew.%) |
|---|---|---|
| $\phi$d(3)CP | = p-[trans-4-(3-Butenyl)cyclohexyl]benzonitril | 10,000 |
| 1d(3)CP | = p-[trans-4-(3E-Pentenyl)cyclohexyl]benzonitril | 10,000 |
| 4P(1)P | = p-[trans-4-(3E-Pentenyl)cyclohexyl]benzonitril | 6,000 |
| 5CC(O)d(3)$\phi$ | = r-1-Cyan-1-(3-butenyl)-cis-4-(trans-4-pentylcyclohexyl)cyclohexan | 10,000 |
| 4CEC4 | = r-1-Cyan-1-(3-butenyl)-cis-4-(trans-4-pentylcyclohexyl)cyclohexan | 12,000 |
| 5CEC3 | = trans-4-Pentylcyclohexancarbonsäure-trans-4-propylcyclohexylester | 12,000 |
| 3CEC3 | = trans-4-Propylcyclohexancarbonsäure-trans-4-propylcyclohexylester | 10,000 |
| 5CPAC4 | = trans-4-Propylcyclohexancarbonsäure-trans-4-propylcyclohexylester | 12,000 |
| 5CPPAC4 | = trans-4-Propylcyclohexancarbonsäure-trans-4-propylcyclohexylester | 4,000 |
| 3CEPCd(3)1 | = trans-4-Propylcyclohexancarbonsäure-p-[trans-4-(3E-pentenyl)cyclohexyl]phenylester | 8,000 |
| 5CPAPAC4 | = 4-(trans-4-Pentylcyclohexyl)-4'-[2-(trans-4-butylcyclohexyl)äthyl]-1,1'-äthylendibenzol | 6,000 |

EP 0 260 450 B1

Auch diese Mischung wurde mit einem geeigneten chiralen Zusatz versehen.

Die Bezeichnungsweise der Komponenten ist dem Fachmann bekannt. Es wird hierfür z.B. auf die Publikationen von Schadt, M. et al. in Mol. Cryst. Lig. Cryst. 122 (1985) 241ff und in Proc. Int. Displ. Res. Conf ., San Diego (1985) verwiesen.

In der folgenden Tabelle 1 sind alle relevanten Parameter dieser beiden Mischungen "A" und "B" und von Zellen mit diesen Mischungen zusammengestellt.

## Tabelle 1

| Parameter | Mischung "A" | | Mischung "B" | |
|---|---|---|---|---|
| Klärpunkt $T_{cl}$ [°C] | 81 | | 77 | |
| Schmelzpunkt $T_m$ [°C] | <-30 | | <-30 | |
| Diel.Konst.parall. $\epsilon$ | 8,99 | | 10,3 | |
| Dielek. Anisotropie $\Delta\epsilon$ | 4,31 | | 6,2 | |
| $n_o$ | 1,482 | | 1,499 | |
| Optische Anisotropie $\Delta n$ | 0,088 | | 0,125 | |
| $k_{11}$ $[10^{-12}N]$ | 11,13 | | 11,34 | |
| $k_{22}$ $[10^{-12}N]$ | 4,98 | | 4,47 | |
| $k_{33}/k_{11}$ | 1,31 | | 1,04 | |
| Viskosität $\eta(+22°C)$ [mPa•s] | 24 | | 27 | |
| Viskosität $\eta(-20°C)$ [mPa•s] | 350 | | 460 | |
| Optischer Gangunterschied $\Delta n \cdot d$ [µm] | 0,44 | | 0,625 | |
| Verdrillungswinkel | -180° | -90° | -180° | -90° |
| Elektrodenabstand [µm] | 5 | 6 | 5 | 8 |
| 2d/P (P=Ganghöhe) | 0,55 | 0 | 0,6 | 0 |

Mit diesen Mischungen wurden die in der folgenden Tabelle 2 zusammengestellten elektro-optischen Resultate erzielt. Den Ergebnissen, die mit der Vorliegenden neuen Zelle erreicht wurden, sind jeweils die Werte gegenüberge5 stellt, die mit den gleichen Flüssigkristallmischungen in einer konventionellen Drehzelle erzielt wurden.

Tabelle 2

| | Mischung "A" | | Mischung "B" | |
|---|---|---|---|---|
| | neue Zelle | Drehzelle | neue Zelle | Drehzelle |
| $V_{10}$ $(\theta = 0^\circ)$ [V] | 2,33 | 2,09 | 1,91 | 2,00 |
| $V_{50}$ $(\theta = 0^\circ)$ [V] | 2,41 | 2,44 | 2,01 | 2,24 |
| Steilheit d. Transmissionskurve $p_0$ $(\theta = 0^\circ)$ | 0,032 | 0,169 | 0,052 | 0,121 |
| $r_T$ $(\theta = 0^\circ)$ [%/$^\circ$c] | - | - | ~-0,28 | -0,28 |
| $r_\theta$ $(V = V_{10})$ [%/$^\circ\theta$) | - | - | -0,081 | -0,49 |
| Multiplexverhältnis $N_{max}$ | 1008 | 42 | 390 | 77 |
| $\theta$ = Sichtwinkel | | | | |

Von den in Tabelle 2 zusammengestellten Parametern bedeuten:
- $V_{10}$ die optische Schwellenspannung, bei 10% Extinktion (bzw. Transmission)
- $V_{50}$ die Spannung bei 50% Transmission
- $p_0$ die Steilheit der Transmissionskurve bei Blickwinkel $\theta = 0^\circ$ gemäss der Formel

$$p_0 = \frac{V_{50}-V_{10}}{V_{10}}$$

- $N_{max}$ die maximale Zahl der multiplexierbaren Zeilen gemäss Alt und Pleshko

$$N_{max} = \left[\frac{(1+p)^2+1}{(1+p)^2-1}\right]^2$$

- $r_T$ die Temperaturabhängigkeit der Schwellenspannung $V_{10}$ zwischen $0^\circ$ C und $40^\circ$ C

$$r_T = \frac{V_{10}(40^\circ C)-V_{10}(0^\circ C)}{40^\circ C} \bullet \frac{100\%}{V_{10}(22^\circ C)} [\%/^\circ C]$$

- $r_\theta$ die Winkelabhängigkeit der Schwellenspannung $V_{10}$ zwischen $\theta = 10^\circ$-$40^\circ$

$$r_\theta = \frac{V_{10}(40^\circ)-V_{10}(0^\circ)}{30^\circ} \bullet \frac{100\%}{V_{10}(10^\circ)} [\%/^\circ\theta]$$

- $\theta$ der Lichteinfallswinkel oder Sichtwinkel.

Das Produkt $\Delta n \bullet d$ beträgt beim vorliegenden Ausführungsbeispiel mit Mischung "A" 0,44 $\mu$m und mit Mischung "B" 0,625 $\mu$m. Es kann mit guten Ergebnissen im Bereich 0,25 $<\Delta n \bullet d<$ 0,7 $\mu$m eingestellt werden.

Der Absolutwert des Verhältnisses der Schichtdicke d zur natürlichen Ganghöhe P beträgt im vorliegenden Ausführungsbeispiel ca. 0,3 und kann mit guten Ergebnissen im Bereich 0,2 < d/P < 0,8 variiert werden.

In Figur 3 ist die für das elektro-optische Verhalten charakteristische Kontrastkurve gezeigt, die mit weissem Licht aufgenommen wurde. Die extreme Steilheit dieser Kurve lässt erkennen, dass mit einer derartigen Zelle ein hohes Multiplexverhältnis erzielbar ist. Tatsächlich wurden bereits Multiplexverhältnisse von über 1000:1 bei einem Kontrast von 5:1 erzielt (siehe Tab. 2). Auch die Winkelabhängigkeit ist wesentlich besser als bei 90° Drehzellen (Tab. 2) und mindestens gleich gut wie bei anderen bekannten hochverdrillten Zellenstrukturen. Die sehr geringe Welligkeit der Kurve im ausgeschalteten als auch im eingeschalteten Zustand ist eine Folge der geringen inhärenten Farbigkeit der Zelle (schwarz-weiss, bzw. weiss-schwarz Kontrast).

Mit den in den folgenden Tabelle 3 und 4 zusammengestellten Konfigurationen mit bestimmten Werten für das Produkt $\Delta n \cdot d$ und für die Winkel $\phi$, $\beta$ und $\psi$ wurden besonders gute Ergebnisse erzielt. Diese Konfigurationen stellen daher bevorzugte Ausführungsformen der Erfindung dar. Dabei ist die Dotierung mit chiralen Zusätzen jeweils so gewählt, dass die sich ergebende Ganghöhe zusammen mit dem Plattenabstand den gewünschten Verdrillungswinkel $\phi$ ergibt. Tabelle 3 enthält Konfiguration, die einen positiven Kontrast ergeben; Tabelle 4 enthält Konfigurationen für negativen Kontrast.

Tabelle 3

| $\phi$ (°) | $\Delta n \cdot d$ ($\mu$m) | $\beta$ (°) | $\psi$ (°) |
|---|---|---|---|
| 180 | 0,4 - 0,7 | 0 ± 20 | 90 ± 20 |
| " | " | 90 ± 20 | -80 ± 20 |
| 210 | 0,4 - 0,5 | 0 ± 20 | 90 ± 20 |
| " | " | 90 ± 20 | -80 ± 20 |
| " | 0,6 | 0 ± 30 | 90 ± 20 |
| " | " | 100 ± 20 | -90 ± 30 |
| " | 0,7 | 10 ± 30 | 70 ± 30 |
| " | " | 110 ± 20 | -110 ± 20 |
| 240 | 0,4 | 10 ± 20 | 95 ± 20 |
| " | " | 100 ± 20 | -90 ± 20 |
| " | 0,5 | 30 ± 20 | 95 ± 15 |
| " | " | 120 ± 20 | -90 ± 25 |
| " | 0,6 | 30 ± 25 | 85 ± 20 |
| " | " | 120 ± 25 | -90 ± 25 |
| " | 0,7 | 30 ± 25 | 80 ± 30 |
| " | " | 130 ± 30 | -100 ± 25 |
| 270 | 0,5 | 30 ± 30 | 80 ± 20 |
| " | 0,6 | 50 ± 30 | 70 ± 30 |
| " | " | 140 ± 30 | -100 ± 30 |
| " | 0,7 | 60 ± 30 | 60 ± 30 |
| " | " | 140 ± 30 | -110 ± 30 |

EP 0 260 450 B1

Tabelle 4

| φ (°) | Δn•d (μm) | β (°) | ψ (°) |
|---|---|---|---|
| 180 | 0.4 | 25 ± 20 | 40 ± 20 |
| " | 0.5 | 30 ± 20 | 30 ± 20 |
| | " | 125 ± 20 | 40 ± 20 |
| | 0,6 | 40 ± 20 | 10 ± 20 |
| | " | 130 ± 20 | 10 ± 20 |
| | 0,7 | 60 ± 20 | 150 ± 20 |
| | " | 150 ± 20 | 150 ± 20 |
| 210 | 0,4 | 40 ± 20 | 50 ± 20 |
| " | " | 130 ± 20 | 50 ± 20 |
| " | 0,5 | 45 ± 20 | 30 ± 20 |
| " | " | 135 ± 20 | 30 ± 20 |
| | 0,6 | 60 ± 20 | 10 ± 20 |
| | " | 150 ± 20 | 10 ± 20 |
| " | 0,7 | 80 ± 20 | 160 ± 20 |
| " | " | 170 ± 20 | 160 ± 20 |
| 240 | 0,5 | 160 ± 20 | 30 ± 20 |
| " | 0,6 | 75 ± 20 | 20 ± 20 |
| " | " | 170 ± 20 | 10 ± 20 |
| " | 0,7 | 0 ± 30 | 170 ± 20 |
| " | " | 85 ± 20 | 170 ± 20 |
| 270 | 0,5 | 170 ± 20 | 40 ± 20 |
| " | 0,6 | 10 ± 20 | 20 ± 20 |
| " | " | 100 ± 20 | 20 ± 20 |
| " | 0,7 | 30 ± 40 | 10 ± 20 |
| " | " | 125 ± 40 | 10 ± 20 |

Die oben beschriebene Zelle kann sowohl in Transmission als auch in Reflexion betrieben werden.

**Patentansprüche**

1.  Flüssigkristallanzeigezelle aus einem zwischen zwei mit Elektroden und Oberflächenorientierungen versehenen Platten und Polarisatoren angeordneten hochverdrillten, chiral dotierten nematischen Flüssigkristall mit natürlicher Ganghöhe P und mit positiver dielektrischer Anisotropie, gekennzeichnet durch die Kombination aus einem Verdrillungswinkel $\phi$ zwischen 120° und 260°, einem Produkt aus Brechungsindex-Anisotropie und Dicke des Flüssigkristalls Δn•d von 0,2 bis 0,7 μm und einem Dicken/Ganghöhen-Verhältnis d/P von 0,2 bis 0,8.

2.  Flüssigkristallzelle nach Anspruch 1, dadurch gekennzeichnet, dass der Verdrillungswinkel $\phi$ 180° beträgt.

3.  Flüssigkristallzelle nach Anspruch 1, gekennzeichnet durch $\phi$ = 180°, einem Winkel $\beta$ zwischen der Richtung der Oberflächenorientierung und der Polarisationsrichtung an der lichteinfallsseitigen Platte von 0° und einem Winkel $\psi$ zwischen der Polarisationsrichtung an der lichteinfallsseitigen Platte und der Polarisationsrichtung an der lichtausfallsseitigen Platte von 90°.

4.  Flüssigkristallzelle nach Anspruch 1, dadurch gekennzeichnet, dass $\phi$ = 180°, $\beta$ = 0° und $\psi$ = 135°.

5.  Flüssigkristallzelle nach Anspruch 1, dadurch gekennzeichnet, dass der Winkel $\beta$ = 0° ± 10° und der Winkel $\psi$ = 90° ±40° beträgt.

6.  Flüssigkristallzelle nach Anspruch 1, dadurch gekennzeichnet, dass $\beta$ = 0° ist und $\psi$ = 135° beträgt.

7.  Flüssigkristallzelle nach Anspruch 1, dadurch gekennzeichnet, dass $\beta$ = 90° ± 10° und die Polarisatoren gekreuzt sind.

10

## EP 0 260 450 B1

8. Flüssigkristallzelle nach Anspruch 1, dadurch gekennzeichnet, dass Δn•d = 0,4-0,6 μm beträgt.

9. Flüssigkristallzelle nach Anspruch 1, dadurch gekennzeichnet, dass das Dicken/Ganghöhenverhältnis d/P = 0,25 bis 0,4 beträgt.

10. Flüssigkristallzelle nach Anspruch 1, dadurch gekennzeichnet, dass die Zelle in Reflexion betrieben wird.

**Claims**

1. A liquid crystal display cell comprising a highly twisted, chirally doped nematic liquid crystal having natural pitch P and positive dielectric anisotropy disoposed between two plates having electrodes and surface orientations and polarizers, characterized by the combination of a twist angle $\phi$ between $120°$ and $260°$, a product from refractive index - anisotropy and liquid crystal thickness Δn•d of 0.2 to 0.7 μm and a thickness/pitch ratio d/p of 0.2 to 0.8.

2. A liquid crystal cell according to claim 1, characterized in that the twist angle $\phi$ is $180°$.

3. A liquid crystal cell according to claim 1, characterized by $\phi = 180°$, an angle $\beta$ between the surface orientation direction and the polarization direction of the plate on the light incidence side of $0°$ and an angle $\psi$ between the polarization direction of the plate on the light incidence side and the polarization direction of the plate on the light exit side of $90°$.

4. A liquid crystal cell according to claim 1, characterized in that $\phi = 180°$, $\beta = 0°$ and $\psi = 135°$.

5. A liquid crystal cellaccording to claim 1, characterized in that the angle $\beta = 0° \pm 10°$ and the angle $\psi = 90° \pm 40°$.

6. A liquid crystal cell according to claim 1, characterized in that $\beta = 0°$ and $\psi = 135°$.

7. A liquid crystal cell according to claim 1, characterized in that $\beta = 90° \pm 10°$ and the polarizers are crossed.

8. A liquid crystal cell according to claim 1, characterized in that Δn•d = 0.4-0.6 μm.

9. A liquid crystal cell according to claim 1, characterized in that the thickness/pitch ratio d/P = 0.25 to 0.4.

10. A liquid crystal cell according to claim 1, characterized in that the cell is operated in reflection.

**Revendications**

1. Cellule d'afficheur à cristaux liquides, formée d'un cristal liquide nématique à dopage chiral, présentant une haute torsion, avec un pas naturel P et à anisotropie diélectrique positive, qui est disposé entre deux plaques-polariseurs pourvues d'électrodes et d'orientations de surface, caractérisée par la combinaison d'un angle de torsion $\phi$ compris entre $120°$ et $260°$, d'un produit de l'anisotropie d'indice de réfraction et de l'épaisseur du cristal Δn • d de 0,2 à 0,7 μm et d'un rapport épaisseur/pas d/P de 0,2 à 0,8.

2. Cellule d'afficheur à cristaux liquides selon la revendication 1, caractérisée en ce que l'angle de torsion $\phi$ = de $180°$.

3. Cellule d'afficheur à cristaux liquides selon la revendication 1, caractérisée par $\phi = 180°$, un angle $\beta$ entre la direction de l'orientation de surface et la direction de polarisation sur la plaque côté entrée de la lumière de $0°$ et un angle $\psi$ entre la direction de polarisation sur la plaque côté entrée de la lumière et la direction de polarisation sur la plaque côté sortie de la lumière de $90°$.

4. Cellule d'afficheur à cristaux liquides selon la revendication 1, caractérisée en ce que $\phi = 180°$, $\beta$ =

$0°$ et $\psi = 135°$.

5. Cellule d'afficheur à cristaux liquides selon la revendication 1, caractérisée en ce que l'angle $\beta$ est de $0° \pm 10°$ et l'angle $\psi$ est de $90° \pm 40$).

6. Cellule d'afficheur à cristaux liquides selon la revendication 1, caractérisée en ce que $\beta$ est de $0°$ et $\psi$ est de $135°$.

7. Cellule d'afficheur à cristaux liquides selon la revendication 1, caractérisée en ce que $\beta$ est de $90° \pm 10°$ et les polariseurs sont croisés.

8. Cellule d'afficheur à cristaux liquides selon la revendication 1, caractérisée en ce que $\Delta n \cdot d$ est de 0,4 à 0,6 $\mu$m.

9. Cellule d'afficheur à cristaux liquides selon la revendication 1, caractérisée en ce que le rapport épaisseur/pas d/P est de 0,25 à 0,4.

10. Cellule d'afficheur à cristaux liquides selon la revendication 1, caractérisée en ce que la cellule est utilisée en réflexion.

Fig. 1

Fig. 2

EXTINKTION

Fig. 3

14